# EUROPEAN PATENT APPLICATION

(11) **EP 4 800 950 A1**
(43) Date of publication of application: **02.09.2026**
(21) Application number: 24883933.4
(22) Date of filing: 14.06.2024
(51) Int. Cl.: H04L 1/1607

(54) **DATA TRANSMISSION METHOD AND APPARATUS AND STORAGE MEDIUM**

(30) Priority: 31.10.2023 CN 202311447882
(71) Applicant: ZTE CORPORATION, Shenzhen, Guangdong 518057 (CN)
(72) Inventor: LIU, Yu, Shenzhen, Guangdong 518057 (CN); XIE, Feng, Shenzhen, Guangdong 518057 (CN); WANG, Fei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099153
(87) International publication number: WO 2025/091922

(57) **Abstract**

The present disclosure relates to the technical field of wireless communications, and provides a data transmission method and apparatus and a storage medium. The method comprises: sending a first message to a second communication node, the first message being used for requesting to transmit novel data between a first communication node and the second communication node; and receiving a second message sent by the second communication node, the second message being used for indicating whether to transmit the novel data between the first communication node and the second communication node or not.

## Description

### CROSS REFERENCE TO RELATED APPLICATION(S)

The present disclosure claims a priority to Chinese Patent Application with the application No. 202311447882.1, filed with China National Intellectual Property Administration on October 31, 2023, and titled "Data transmission method and apparatus and storage medium", the entire content of which is incorporated into herein by reference.

### TECHNICAL FIELD

The present disclosure relates to the field of wireless communication technologies, and in particular, to a data transmission method and apparatus, and a storage medium.

### BACKGROUND

In a current wireless communication system, for an uplink data transmission, a network schedules through a scheduling request (Scheduling Request, SR) or a buffer status report (Buffer Status Report, BSR) from a user equipment (User Equipment, UE); for a downlink data transmission, the network schedules according to a current downlink data volume. The network does not need to consider a complete transmission of big data (e.g., large files) because large files have been fragmented at the application layer.

Therefore, in the current wireless communication system, transmission control strategies for data with relatively large volume (such as AI data, sensing data, computing power data, and other new types of data) generated within the system are lack, and thus the reliability of data transmission cannot be guaranteed.

### SUMMARY

In an aspect, a data transmission method is provided, applied to a first communication node and includes: sending a first message to a second communication node, where the first message is used for requesting transmission of new-type data between the first communication node and the second communication node; and receiving a second message sent from the second communication node, where the second message is used for indicating whether to transmit the new-type data between the first communication node and the second communication node.

In another aspect, a data transmission method is provided, applied to a second communication node and includes: receiving a first message sent from a first communication node, where the first message is used for requesting transmission of new-type data between the first communication node and the second communication node; and in response to the first message, sending a second message to the first communication node, where the second message is used for indicating whether to transmit the new-type data between the first communication node and the second communication node.

In another aspect, a data transmission apparatus is provided, applied to a first communication node and includes: a sending module, configured to send a first message to a second communication node, where the first message is used for requesting transmission new-type data between the first communication node and the second communication node; and a receiving module, configured to receive a second message sent from the second communication node, where the second message is used for indicating whether to transmit the new-type data between the first communication node and the second communication node.

In another aspect, a data transmission apparatus is provided, applied to a second communication node and includes: a receiving module, configured to receive a first message sent from a first communication node, where the first message is used for requesting transmission new-type data between the first communication node and the second communication node; and a sending module, configured to, in response to the first message, send a second message to the first communication node, where the second message is used for indicating whether to transmit the new-type data between the first communication node and the second communication node.

In yet another aspect, a communication apparatus is provided, and includes: a memory and a processor; the memory is coupled with the processor; the memory is configured to store a computer program; and the processor, upon executing the computer program, implements the data transmission method in any one of the embodiments described above.

In yet another aspect, a computer readable storage medium is provided and the computer readable storage medium has stored computer program instructions thereon, and the computer program instructions, upon being executed by a processor, implement the data transmission method in any one of the embodiments described above.

In yet another aspect, a computer program product is provided, the computer program product includes computer program instructions, and the computer program instructions, upon being executed by a processor, implement the data transmission method in any one of the embodiments described above.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is an architectural schematic diagram of a wireless communication system provided by some embodiments of the present disclosure;
FIG. 2 is a first flowchart of a data transmission method provided by some embodiments of the present disclosure;
FIG. 3 is a second flowchart of a data transmission method provided by some embodiments of the present disclosure;
FIG. 4 is a third flowchart of a data transmission method provided by some embodiments of the present disclosure;
FIG. 5 is a fourth flowchart of a data transmission method provided by some embodiments of the present disclosure;
FIG. 6 is a fifth flowchart of a data transmission method provided by some embodiments of the present disclosure;
FIG. 7 is a sixth flowchart of a data transmission method provided by some embodiments of the present disclosure;
FIG. 8 is a seventh flowchart of a data transmission method provided by some embodiments of the present disclosure;
FIG. 9 is an eighth flowchart of a data transmission method provided by some embodiments of the present disclosure;
FIG. 10 is a ninth flowchart of a data transmission method provided by some embodiments of the present disclosure;
FIG. 11 is a tenth flowchart of a data transmission method provided by some embodiments of the present disclosure;
FIG. 12 is an eleventh flowchart of a data transmission method provided by some embodiments of the present disclosure;
FIG. 13 is a first structural schematic diagram of a data transmission apparatus provided by some embodiments of the present disclosure;
FIG. 14 is a second structural schematic diagram of a data transmission apparatus provided by some embodiments of the present disclosure; and
FIG. 15 is a structural schematic diagram of a communication apparatus provided by some embodiments of the present disclosure.

### DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that, in the present disclosure, words such as "exemplarily" or "for example", etc., are used to represent an example, illustration, or explanation. Any embodiment or design solution described with "exemplary/exemplarily" or "for example" in the present disclosure is not necessarily to be construed as preferred or advantageous over other embodiments or design solutions. Specifically, the use of the terms such as "exemplary/exemplarily" or "for example", etc., is intended to present related concepts in a specific manner.

Hereinafter, terms such as "first" and "second", etc., are used for descriptive purposes only, but cannot be understood to indicate or imply the relative importance or implicitly indicate the number of the indicated technical features. Thus, features defined with "first" or "second", etc., may explicitly or implicitly include one or more such features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represents three cases: only A, A and B, and only B. Additionally, "at least one" means one or more, and "multiple/plurality of" means two or more.

In an existing wireless communication system (e.g., a long term evolution (Long Term Evolution, LTE) system, a new radio (New Radio, NR) system, etc.), most data transmitted originates from an application layer, for example, an internet protocol (Internet Protocol, IP) packet; a length of an IP packet is usually 1500 bytes (a standard Ethernet frame) or 9000 bytes (a Jumbo frame). However, in future wireless communication systems (e.g., the 6th generation mobile network (6G)), due to support for new services such as artificial intelligence (Artificial Intelligence, AI), sensing, and computing power, etc., the data transmitted in the system may not be IP-based packets, but rather AI data, sensing data, computing power data, etc.; this type of data may be collectively referred to as new-type data. These new-type data may not originate from the application layer, but are data generated within the communication system.

The main difference between this new-type data transmission and IP packet is that: for IP packets, the network only needs to guarantee the transmission authorization of the IP packets; whereas for new-type data, the data itself may be relatively large, and completing the transmission of all data may require a long time; during this period, due to device or network reasons, it may not be guaranteed that the data may be successfully transmitted to the peer within a specified duration, or the receiving end may no longer need the data in the process of transmission, or the sending end may be unable to continue transmitting the data, etc., leading to poor reliability of the new-type data transmission.

As described in the background, in the current wireless communication system, for the uplink data transmission, the network schedules through the SR or BSR from the UE; for the downlink data transmission, the network schedules through the current downlink data volume. The network does not need to consider the complete transmission of big data (e.g., large files) because large files have been fragmented at the application layer. Therefore, in the current wireless communication system, transmission control strategies for data with relatively large volume (such as AI data, sensing data, computing power data, and other new types of data) generated within the system are lack, and thus the reliability of data transmission cannot be guaranteed.

To address the above technical problem, the embodiments of the present disclosure provide a data transmission method, the idea of which is that: a first communication node sends a first message to a second communication node for requesting transmission of new-type data; then, the first communication node receives a second message sent from the second communication node; the second message is used to indicate whether to transmit the new-type data between the first communication node and the second communication node. It can be understood that, the present disclosure provides a general data transmission process, which can perform the transmission of new-type data only after both the sender and receiver confirm that the new-type data may be transmitted, thereby ensuring the reliability of the data transmission.

The technical solutions provided in the embodiments of the present disclosure may be applied to various wireless communication systems, for example, an NR wireless communication system, an LTE wireless communication system, a future wireless communication system, or multiple communication fusion systems, etc., which are not limited to the embodiments of the present disclosure.

In the embodiments of the present disclosure, a network architecture of the wireless communication system (including but not limited to 3G, 4G, 5G, and future wireless communication systems) may include at least a first communication node and a second communication node, where the first communication node and the second communication node communicate by a radio channel or a wired channel.

Exemplarily, the above communication nodes (including: the first communication node and the second communication node) may be: a terminal, a base station, a core network element, or other network elements processing data.

It should be understood that, in this example, in a downlink, the first communication node may be a network side device (e.g., including but not limited to a base station), and the second communication node may be a terminal side device (e.g., including but not limited to a terminal device). Certainly, in an uplink, the first communication node may also be a terminal side device, and the second communication node may also be a network side device. In a case where two communication nodes are in device-to-device communication, both the first communication node and the second communication node may be base stations or terminal devices.

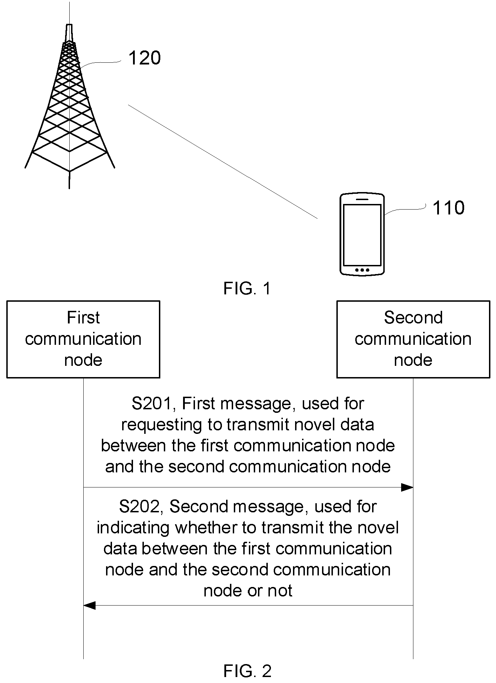

Exemplarily, taking an example in which the first communication node is a terminal device and the second communication node is a base station, FIG. 1 shows an architecture schematic diagram of a wireless communication system provided in the embodiments of the present disclosure. As shown in FIG. 1, the wireless communication system includes a terminal device 110 and a base station 120. Data transmission is performed between the terminal device 110 and the base station 120 by a radio channel.

Exemplarily, the terminal device 110 may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal device may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal device sometimes may also be referred to as a user, a UE, an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

Exemplarily, the base station 120 may be a base station or an evolutional base station (evolutional node B, eNB or eNodeB) in long term evolution (LTE), long term evolution advanced (LTEA), a base station device in a 5G network, or a base station in a future communication system, etc.; the base station may include various network side devices such as various macro base stations, micro base stations, home base stations, wireless remote, reconfigurable intelligent surfaces (RIS), routers, wireless fidelity (WIFI) devices, etc.

It should be noted that, FIG. 1 is only an exemplary framework diagram, and a number of devices and names of the various devices included in FIG. 1 are not limited, and in addition to the devices shown in FIG. 1, the wireless communication system may also include other devices, such as a core network device.

It can be understood that, the embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

The data transmission method provided by the embodiments of the present disclosure is specifically introduced below.

The present disclosure provides a data transmission method; as shown in FIG. 2, and the method includes steps S201 to S202 as follows.

In S201, a first communication node sends a first message to a second communication node. Correspondingly, the second communication node receives a first message sent from the first communication node.

Herein, the first message is used for requesting a transmission of new-type data between the first communication node and the second communication node.

In some embodiments, the first communication node may be a sending end of data or a receiving end of data; the second communication node may be a receiving end of data or a sending end of data, which is not limited in the present disclosure.

In some embodiments, the new-type data is data generated within a communication system. Exemplarily, the new-type data includes at least one of: AI data, sensing data, or computing power data.

In some embodiments, a data volume of the new-type data is greater than a first preset threshold. It may be understood that, the data volume of the new-type data is relatively large, which may reach hundreds of megabytes. Therefore, compared with traditional IP packets, the new-type data takes longer to transmit and may be faced with more problems during transmission.

In some embodiments, the first message includes at least one of: a type of to-be-transmitted new-type data, a data volume of the to-be-transmitted new-type data, or an expected duration for completing the transmission. Exemplarily, the type of to-be-transmitted new-type data may include at least one of: AI data, sensing data, or computing power data.

In some embodiments, the first message may be in any one of the following transmission forms: a radio resource control (Radio Resource Control, RRC) signaling, a media access control (Media Access Control, MAC) control element (Control Element, CE), uplink control information (Uplink Control Information, UCI), downlink control information (Downlink Control Information, DCI), a protocol data unit (Protocol Data Unit, PDU).

In some embodiments, when the first communication node sends the first message to the second communication node, the method further includes: starting a timer T1 to limit a retransmission time. Exemplarily, in a case where the timer T1 expires and the first communication node has not received a reply message from the second communication node, the first communication node retransmits the first message to the second communication node. In a case where the timer T1 does not expire and the first communication node receives the reply message from the second communication node, the first communication node turns off the timer T1.

In some embodiments, the step S201 may be implemented as: in a case where a preset condition is satisfied, sending the first message to the second communication node.

Exemplarily, the above preset condition includes at least one of:
the data volume of the to-be-transmitted new-type data being less than the data volume threshold;
the signal quality of the signal received by the first communication node being greater than the signal quality threshold;
the transmission rate of the channel between the first communication node and the second communication node being greater than the transmission rate threshold.

For example, the above data volume threshold may be determined based on the expected duration for completing transmission; or, the data volume threshold may also be determined based on a bandwidth used for transmitting data. It may be understood that, in a case where the data volume of the new-type data is less than the data volume threshold, it can be ensured that the to-be-transmitted new-type data may be completed within an expected duration. Furthermore, in a case where the bandwidth is relatively small, the data volume of the to-be-transmitted new-type data is also required to satisfy the limitation of the data volume corresponding to the bandwidth.

Exemplarily, the above signal quality may be characterized by reference signal receiving power (Reference Signal Receiving Power, RSRP). The signal received by the first communication node may be a reference signal. It may be understood that, in a case where the signal quality is greater than the signal quality threshold, it indicates that the channel between the first communication node and the second communication node is in good condition and may be used for transmitting the new-type data.

It may be understood that, in a case where the transmission rate of the channel between the first communication node and the second communication node is greater than the transmission rate threshold, it indicates that the transmission rate of the channel is relatively fast, ensuring that the to-be-transmitted new-type data may be completed within the expected duration for completing the transmission.

In some embodiments, before step S201, the method further includes: configuring a configuration parameter related to data transmission. Herein, the configuration parameter may be configured by the first communication node or the second communication node. Exemplarily, it may be implemented in the following manners.

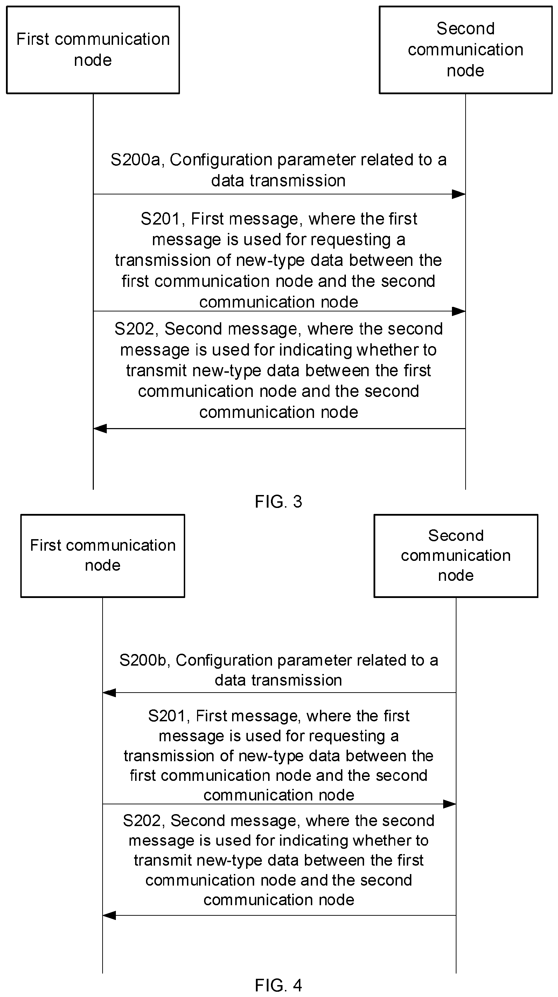

As a possible implementation, as shown in FIG. 3, before step S201, S200a may further be included.

In S200a, a first communication node sends a configuration parameter related to a data transmission to a second communication node; and correspondingly, the second communication node receives the configuration parameter related to the data transmission sent from the first communication node.

Herein, the configuration parameter includes at least one of: a data volume threshold, a signal quality threshold, or a transmission rate threshold. Exemplarily, configuring the configuration parameter related to the data transmission may be implemented as processes as follows.

### 1. Configure the data volume threshold.

Configuring the data volume threshold refers to configuring a size of a data volume allowed for new-type data transmission in a current wireless network, i.e., transmission is allowed only when the data volume of the to-be-transmitted new-type data is less than or equal to the data volume threshold.

Exemplarily, when the first communication node and the second communication node are a UE and a base station, respectively, the data volume threshold is used for data transmission between the UE and the base station. Herein, the transmission between the UE and the base station includes an uplink transmission and a downlink transmission. For example, for the uplink transmission, a UE initiates a data transmission request (e.g., the first message) only when the data volume of the to-be-transmitted new-type data is less than or equal to the data volume threshold; for the downlink transmission, the base station schedules the to-be-transmitted new-type data only when the data volume of the to-be-transmitted new-type data is less than or equal to the data volume threshold.

In some embodiments, the data volume threshold may be thresholds of different levels to implement flexible control and optimization of the wireless communication system. Exemplarily, the data volume threshold may include at least one of: a UE-level parameter, a frequency range (Frequency Range, FR)-level parameter, a cell group-level parameter, a carrier-level parameter, a bandwidth part (Bandwidth Part, BWP)-level parameter, or a bearer-level parameter.

Herein, the UE-level threshold is set based on signal quality or other performance indicators of each UE. For example, a threshold may be set according to RSRP of a UE to ensure that only UEs with signal quality reaching a specific value can transmit the new-type data.

The FR-level threshold is set based on a specific frequency range. In the wireless communication system, different frequency bands are usually used for different services or different communication technologies. By setting the FR-level threshold, it can be controlled which frequency bands are used for transmitting new-type data.

The cell group-level threshold is set based on a group of adjacent base stations. In a cellular network, each cell group consists of multiple base stations, and the cell group-level threshold may be used to control signal coverage, interference coordination, etc., of these base stations.

The carrier-level threshold is set based on a specific carrier. A carrier is an important concept in the wireless communication, representing a specific frequency range for transmitting signals, therefore the carrier-level threshold may be set based on a specific carrier. For example, a threshold may be set according to a signal strength or a signal-to-noise ratio (SNR) of a carrier to ensure that only carriers satisfying specific conditions can be used.

The BWP-level threshold is set based on a specific BWP. A BWP is a parameter used to describe frequency band usage in the wireless communication system. Therefore, the BWP threshold may be used to control bandwidth allocation for different services or different users within a frequency band.

The bearer-level threshold is set based on a specific bearer. A bearer is a parameter used to describe service load in the wireless communication. The bearer-level threshold may be used to control priorities of different services, traffic control, etc.

Exemplarily, in a case where the data volume threshold is the BWP-level, a higher data volume threshold may be configured for a BWP with a large bandwidth.

### 2. Configure a signal quality threshold.

Configuring the signal quality threshold refers to configuring a size of signal quality allowed for new-type data transmission in the current network. For example, the signal quality may be RSRP.

Exemplarily, when the first communication node and the second communication node are a UE and a base station, respectively, the signal quality threshold is used for data transmission between the UE and the base station. Herein, transmission between the UE and the base station includes an uplink transmission and a downlink transmission. For example, for the uplink transmission, the UE initiates a data transmission request (e.g., the above first message) only when the current RSRP of the UE is higher than the signal quality threshold; for the downlink transmission, the base station schedules the to-be-transmitted new-type data only when the base station judges that the current RSRP of the UE is higher than the signal quality threshold.

In some embodiments, the signal quality threshold may be different levels of thresholds, to implement flexible control and optimization of the wireless communication system. Exemplarily, the signal quality threshold may include at least one of: the UE-level parameter, the FR-level parameter, the cell group-level parameter, the carrier-level parameter, the BWP-level parameter, or the bearer-level parameter.

Exemplarily, if the signal quality threshold is configured as the carrier-level, a lower signal quality threshold may be configured for a carrier with a larger coverage.

### 3. Configure a transmission rate threshold.

Configuring the transmission rate threshold refers to configuring a size of rate allowed for new-type data transmission in the current network. That is, transmission of new-type data is allowed only when a transmission rate of a channel between the first communication node and the second communication node is greater than the data volume threshold.

Exemplarily, when the first communication node and the second communication node are the UE and the base station, respectively, the transmission rate threshold is used for data transmission between the UE and the base station. Herein, transmission between the UE and the base station includes an uplink transmission and a downlink transmission. For example, for the uplink transmission, the UE may initiate a data transmission request (e.g., the above first message) only when the UE determines that the current uplink transmission rate is greater than the transmission rate threshold; or, after the UE initiates the uplink data transmission request, the base station may schedule the uplink data (i.e., the new-type data for uplink transmission) only when the base station judges that the current uplink transmission rate is greater than the transmission rate threshold; for the downlink transmission, the base station may schedule downlink data (i.e., the new-type data for downlink transmission) only when the base station judges that the current downlink transmission rate of the UE is greater than the transmission rate threshold.

In some embodiments, the transmission rate threshold may be different levels of thresholds to implement flexible control and optimization of the wireless communication system. Exemplarily, the transmission rate threshold may include at least one of: the UE-level parameter, the FR-level parameter, the cell group-level parameter, the carrier-level parameter, the BWP-level parameter, or the bearer-level parameter.

Exemplarily, if the transmission rate threshold is configured as the bearer-level, a higher transmission rate threshold may be configured for a guaranteed bit rate (GBR) bearer.

In some embodiments, multiple transmission rate thresholds may be configured, and different transmission rate thresholds may correspond to different data sizes.

It may be understood that, a configuration parameter related to data transmission may be configured by the first communication node and sent to the second communication node.

As another possible implementation, as shown in FIG. 4, before the above step S201, the method may further include: S200b.

In S200b, a second communication node sends a configuration parameter related to a data transmission to a first communication node. Correspondingly, the first communication node receives the configuration parameter related to data transmission sent from the second communication node.

Exemplarily, for a configuration process of the configuration parameter related to the data transmission by the second communication node, reference may be made to the above step S200a, which will not be repeated herein.

It may be understood that, the configuration parameter related to the data transmission may be configured by the second communication node and sent to the first communication node.

In S202, in response to the above first message, the second communication node sends a second message to the first communication node. Correspondingly, the first communication node receives the second message sent from the second communication node.

Herein, the second message is used for indicating whether to transmit new-type data between the first communication node and the second communication node.

In some embodiments, the second message includes one of:
an indication for agreeing transmission of the new-type data;
an indication for rejecting transmission of the new-type data;
an indication for suspending transmission of the new-type data.

In some embodiments, the above step S202 may be implemented as that: the second communication node sends the second message to the first communication node according to a satisfaction of a preset condition.

Herein, for the description of the preset condition, reference may be made to step S201, which will not be repeated herein.

Exemplarily, if the second communication node determines that the preset condition is satisfied, the second message sent from the second communication node to the first communication node includes: the indication for agreeing transmission of the new-type data, or the indication for suspending transmission of the new-type data. if the second communication node determines that the preset condition is not satisfied, the second message sent from the second communication node to the first communication node includes: the indication for rejecting transmission of the new-type data, or the indication for suspending the transmission of the new-type data.

In some embodiments, the second message may be in any one of following transmission formats: an RRC signaling, an MAC CE, DCI, UCI, or a PDU. It may be understood that, the transmission format of the second message does not depend on the transmission format of the first message.

It may be understood that, based on the data transmission method provided in the embodiments of the present disclosure, the first communication node may send the first message for requesting transmission of new-type data to the second communication node; and then receive the second message sent from the second communication node; the second message is used for indicating whether to transmit the new-type data between the first communication node and the second communication node. In this way, transmission of the new-type data may be performed only after both the sender and receiver confirm that the new-type data may be transmitted, thereby ensuring reliability of the data transmission.

In some embodiments, in a case where the second message includes the indication for agreeing the transmission of the new-type data, a transmission process for the new-type data is entered between the first communication node and the second communication node.

Herein, a flow direction of the new-type data includes: from the first communication node to the second communication node; or, from the second communication node to the first communication node.

In some embodiments, upon starting transmission of the new-type data, a timer T2 is started for limiting a transmission time of the new-type data. Exemplarily, if the timer T2 expires and the transmission of the new-type data is not completed, it indicates that an actual transmission duration of the new-type data exceeds an expected duration for completing the transmission.

In some embodiments, after the new-type data transmission is completed, a peer is notified that the data transmission is completed, and the timer T2 is stopped.

In some embodiments, upon starting transmission of the new-type data, an indication to start data transmission is included in a first packet of the transmission.

In some embodiments, in a of transmitting the new-type data between the first communication node and the second communication node, both the first communication node and the second communication node may decide to suspend transmission of the new-type data and notify the peer.

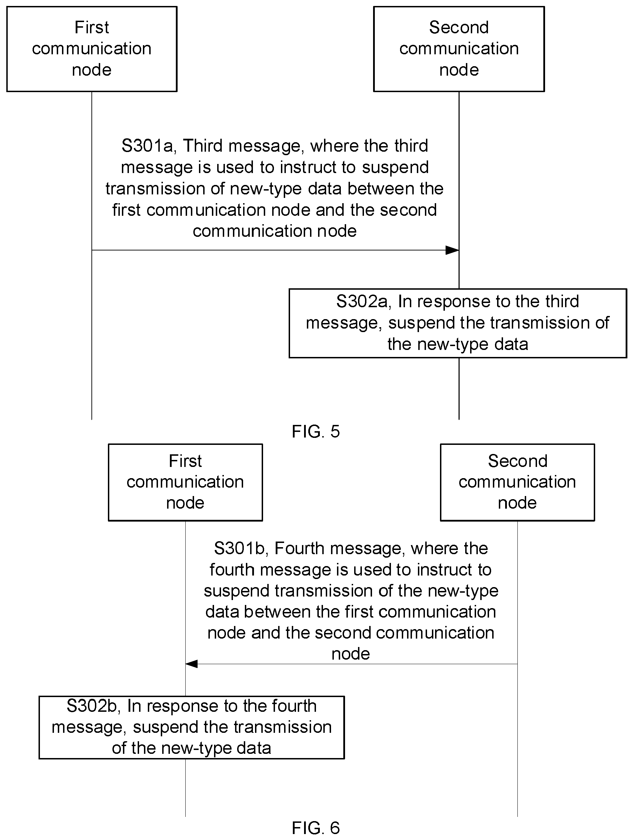

As a possible implementation, as shown in FIG. 5, after step S202, the above method further includes: S301a to S302a.

In S301a, in a process of transmitting the new-type data, in a case of deciding to suspend transmission of the new-type data, the first communication node sends a third message to the second communication node. Correspondingly, the second communication node receives the third message sent from the first communication node.

Herein, the third message is used to instruct to suspend transmission of new-type data between the first communication node and the second communication node.

In S302a, in response to the third message, the second communication node suspends the transmission of the new-type data.

It may be understood that, in the process of transmitting the new-type data, a decision to suspend transmission of the new-type data may be made by the first communication node, and the decision may be informed to the second communication node.

As another possible implementation, as shown in FIG. 6, after step S202, the above method further includes: S301b to S302b.

In S301b, in a process of transmitting the new-type data, in a case of deciding to suspend transmission of the new-type data, the second communication node sends a fourth message to the first communication node. Correspondingly, the first communication node receives the fourth message sent from the second communication node.

Herein, the fourth message is used to instruct to suspend transmission of the new-type data between the first communication node and the second communication node.

In S302b, in response to the fourth message, the first communication node suspends transmission of the new-type data.

It may be understood that, in the process of transmitting the new-type data, a decision to suspend the transmission of the new-type data may be made by the second communication node, and the decision may be informed to the first communication node.

In some embodiments, after suspending the transmission of the new-type data, both the first communication node and the second communication node may decide to resume transmission of the new-type data and notify the peer.

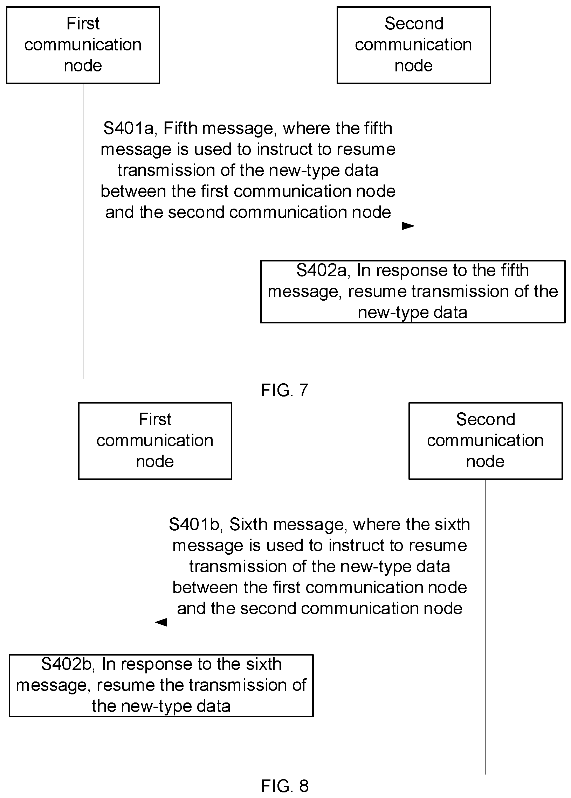

As a possible implementation, as shown in FIG. 7, the above method further includes: S401a to S402a.

In S401a, in a case of deciding to resume transmission of the new-type data, the first communication node sends a fifth message to the second communication node. Correspondingly, the second communication node receives the fifth message sent from the first communication node.

Herein, the fifth message is used to instruct to resume transmission of the new-type data between the first communication node and the second communication node.

In S402a, in response to the fifth message, the second communication node resumes transmission of the new-type data.

It should be noted that, the above steps S401a to S402a may be performed after steps S301a to S302a; or, the above steps S401a to S402a may be performed after steps S301b to S302b, which is not limited to the present disclosure.

It may be understood that, a decision to resume transmission of the new-type data may be made by the first communication node, and the decision may be informed to the second communication node.

As another possible implementation, as shown in FIG. 8, the above method further includes: S401b to S402b.

In S401b, in a case of deciding to resume transmission of the new-type data, the second communication node sends a sixth message to the first communication node. Correspondingly, the first communication node receives the sixth message sent from the second communication node.

Herein, the sixth message is used to instruct to resume transmission of the new-type data between the first communication node and the second communication node.

In S402b, in response to the sixth message, the first communication node resumes transmission of the new-type data.

It should be noted that, the above steps S401b to S402b may be performed after steps S301a to S302a; or, the above steps S401b to S402b may be performed after steps S301b to S302b, which is not limited to the present disclosure.

It may be understood that, a decision to resume transmission of the new-type data may be made by the second communication node, and the decision may be informed to the first communication node.

In some embodiments, in a process of transmitting the new-type data, both the first communication node and the second communication node may decide to end transmission of the new-type data and notify the peer.

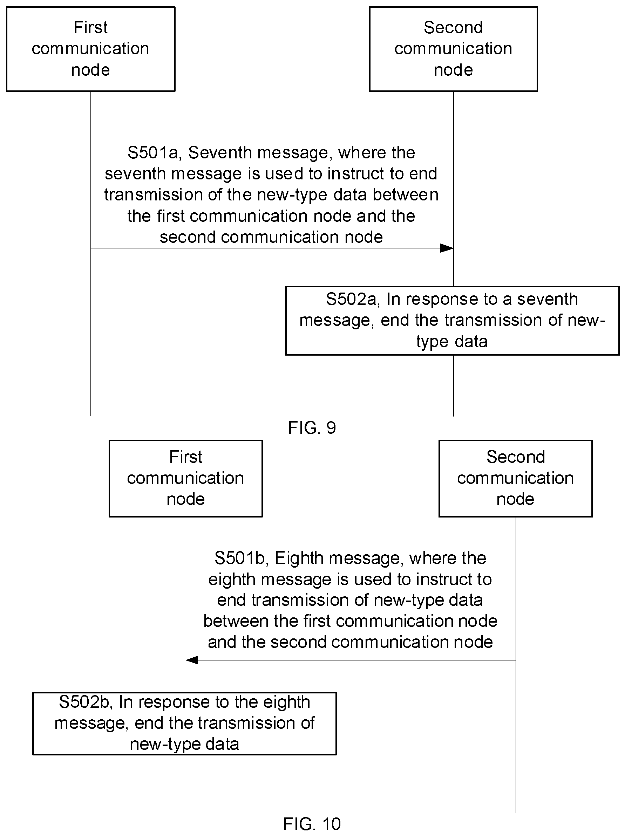

As a possible implementation, as shown in FIG. 9, the above method further includes: S501a to S502a.

In S501a, in a process of transmitting the new-type data, in a case of deciding to end transmission of the new-type data, the first communication node sends a seventh message to the second communication node. Correspondingly, the second communication node receives the seventh message sent from the first communication node.

Herein, the seventh message is used to instruct to end transmission of the new-type data between the first communication node and the second communication node.

In S502a, in response to a seventh message, the second communication node ends the transmission of new-type data.

It should be noted that, the above steps S501a to S502a may be performed after steps S201 to S202; or, the above steps S501a to S502a may be performed after steps S301a to S302a; or, the above steps S501a to S502a may be performed after steps S301b to S302b; or, the above steps S501a to S502a may be performed after steps S401a to S402a; or, the above steps S501a to S502a may be performed after steps S401b to S402b, which is not limited to the present disclosure.

It can be understood that, the decision to end the transmission of new-type data may be made by the first communication node, and the decision is notified to the second communication node.

As another possible implementation, as shown in FIG. 10, the above method further includes: S501b to S502b.

In S501b, in a process of transmitting the new-type data, in a case of deciding to end the transmission of the new-type data, the second communication node sends an eighth message to the first communication node. Correspondingly, the first communication node receives the eighth message sent from the second communication node.

In S502b, in response to the eighth message, the first communication node ends the transmission of new-type data.

It should be noted that the above steps S501b to S502b may be performed after steps S201 to S202; or, the above steps S501b to S502b may be performed after steps S301a to S302a; or, the above steps S501b to S502b may be performed after steps S301b to S302b; or, the above steps S501b to S502b may be performed after steps S401a to S402a; or, the above steps S501b to S502b may be performed after steps S401b to S402b, which is not limited to the present disclosure.

It can be understood that, the decision to end the transmission of new-type data may be made by the second communication node, and the decision is notified to the first communication node.

In overview, it can be seen that the present disclosure provides a new-type data transmission process, including how to configure the parameter, how to initiate the new-type data transmission, and how to control the process of the new-type data transmission, which can transmit new-type data (for example, the AI data, the sensing data, the computing power data, etc.) with a large data volume generated within a system, and the reliability of data transmission may be ensured.

For ease of understanding, the data transmission method provided in the present disclosure is explained below in the form of examples.

Exemplarily, the first communication node is denoted as Node A (PointA), and the second communication node is denoted as Node B (PointB). Assume that the Node A is a sending end of data transmission and Node B is a receiving end of the data transmission, the data transmission method provided in the present disclosure is explained below by taking an example in which a trigger source of the data transmission process is Node A and Node B, respectively.

Example 1: the sending end Node A triggers the data transmission process.

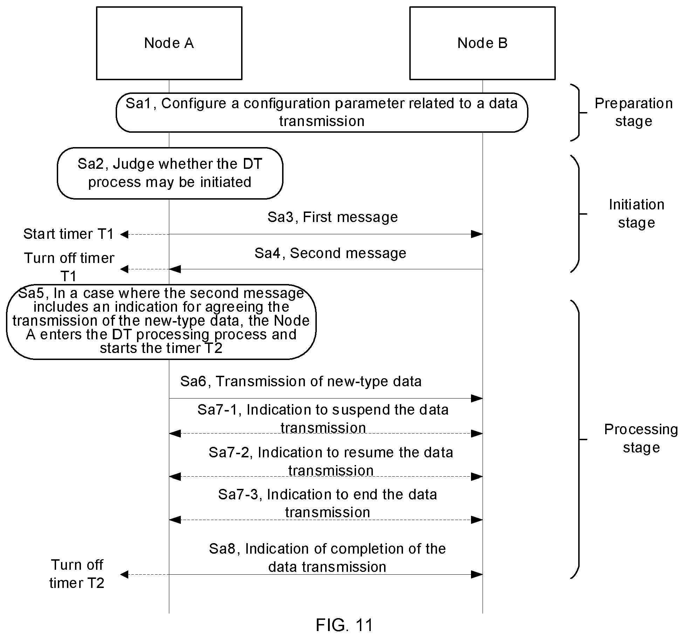

As shown in FIG. 11, a data transmission (Data Transmission, DT) process includes three stages: a preparation stage, an initiation stage, and a processing stage. Herein, the three stages may be implemented as the following steps respectively:
Stage 1, the preparation stage includes: Sa1.

In Sa1, a configuration parameter related to a data transmission is configured.

Herein, the configuration parameter includes at least one of: a data volume threshold, a signal quality threshold or a transmission rate threshold.

Stage 2, the initiation stage includes: Sa2 to Sa4.

In Sa2, when there is a need for data transmission, the Node A judges whether the DT process may be initiated.

In Sa3, in a case where the DT process may be initiated, the Node A sends a first message to the Node B and starts a timer T1.

Herein, the first message includes a data transmission request (DT request), which is used to request transmission of new-type data between the Node A and the Node B.

Exemplarily, the first message may include at least one of: a type of the to-be-transmitted new-type data, a data volume of the to-be-transmitted new-type data, an expected duration for completing the transmission.

Exemplarily, the first message may be an RRC signaling, an MAC CE, UCI, DCI, or a specific data PDU, etc.

In Sa4, in response to the first message, the Node B sends a second message to the Node A.

Herein, the second message includes a data transmission indication (DT indication), which is used to indicate whether to transmit the new-type data between the Node A and the Node B.

Exemplarily, the second message includes one of: an indication for agreeing transmission of the new-type data, an indication for rejecting transmission of the new-type data, an indication for suspending transmission of the new-type data.

Exemplarily, the second message may be the RRC signaling, the MAC CE, the DCI, the UCI, or the specific data PDU, etc.

In some embodiments, if the Node A starts the timer T1 when performing the step Sa3, then Node A needs to turn off the timer T1 when performing the step Sa4.

Stage 3, the processing stage includes: Sa5 to Sa8.

In Sa5, in a case where the second message includes an indication for agreeing the transmission of the new-type data, the Node A enters the DT processing procedure.

Optionally, when the Node A enters the DT processing procedure, the Node A may also start a timer T2 to limit a transmission duration of the new-type data.

In Sa6, the Node A transmits the new-type data to the Node B.

Herein, the Node A may indicate the start of the DT in a first packet data sent to the Node B.

In some embodiments, in a process of transmitting the new-type data, both the Node A and the Node B may control the DT process (including suspending the DT process, resuming the DT process, ending the DT process, etc.). Exemplarily, the following steps may be included.

In Sa7-1, the Node A or Node B decides to suspend the DT process according to a processing strategy, and sends an indication to suspend the data transmission (Suspend DT) to the peer.

In Sa7-2, the Node A or Node B decides to resume the DT process according to the processing strategy, and sends an indication to resume the data transmission (Resume DT) to the peer.

In Sa7-3, the Node A or Node B decides to end the DT process according to the processing strategy, and sends an indication to end the data transmission (End DT) to the peer.

In Sa8, after the new-type data transmission is complete, the Node A sends an indication of completion of the data transmission (Complete DT) to the Node B.

In some embodiments, if the Node A starts the timer T2 when performing the step Sa5, then the Node A needs to turn off the timer T2 when performing the step Sa8.

Example 2: the receiving end Node B triggers a data transmission process.

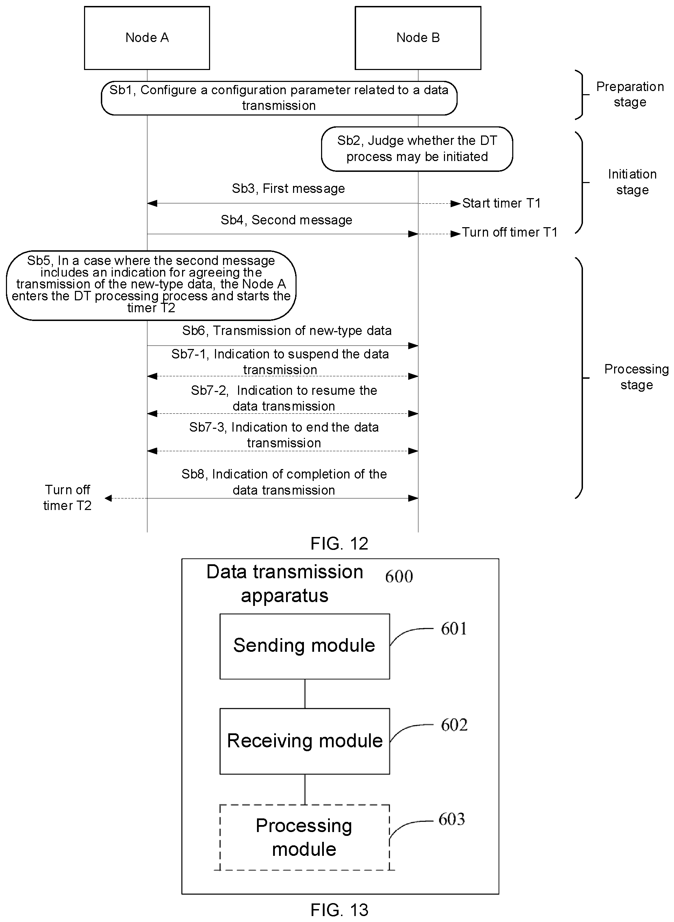

As shown in FIG. 12, the Node B triggering the data transmission process may be implemented as: Sb1 to Sb8.

Stage 1, the preparation stage includes: Sb1.

In Sb1, a configuration parameter related to a data transmission is configured.
stage 2, the initiation stage includes: Sb1 to Sb4.

In Sb2, when there is a need for data transmission, the Node B judges whether a DT process may be initiated.

In Sb3, in a case where the DT process may be initiated, the Node B sends a first message to the Node A and starts a timer T1.

Herein, the first message includes a data transmission request (DT request), which is used to request transmission of new-type data between the Node A and the Node B.

Exemplarily, the first message may include at least one of: a type of the to-be-transmitted new-type data, a data volume of the to-be-transmitted new-type data, an expected duration for completing the transmission.

Exemplarily, the first message may be an RRC signaling, an MAC CE, DCI, UCI, or a specific data PDU, etc.

In Sb4, in response to the first message, the Node A sends a second message to the Node B.

Herein, the second message includes a data transmission indication (DT indication), which is used to indicate whether to transmit the new-type data between the Node A and the Node B.

Exemplarily, the second message includes one of: an indication for agreeing transmission of the new-type data, an indication for rejecting transmission of the new-type data, an indication for suspending transmission of the new-type data.

Exemplarily, the second message may be the RRC signaling, the MAC CE, the UCI, the DCI, or the specific data PDU, etc.

In some embodiments, if the Node B starts the timer T1 when performing the step Sb3, then Node B needs to turn off the timer T1 when performing the step Sb4.

Stage 3, the processing stage includes: Sb5 to Sb8.

In Sb5, in a case where the second message includes an indication for agreeing the transmission of the new-type data, the Node A enters a DT processing procedure.

Optionally, when the Node A enters the DT processing procedure, the Node A may also start a timer T2 to limit a transmission duration of the new-type data.

In Sb6, the Node A transmits the new-type data to the Node B.

Herein, the Node A may indicate the start of the DT in a first packet data sent to the Node B.

In some embodiments, in a process of transmitting the new-type data, both the Node A and the Node B may control the DT process (including suspending the DT process, resuming the DT process, ending the DT process, etc.). Exemplarily, the following steps may be included.

In Sb7-1, the Node A or the Node B decides to suspend the DT process according to the processing strategy, and sends an indication to suspend data transmission (Suspend DT) to the peer.

In Sb7-2, the Node A or Node B decides to resume the DT process according to the processing strategy, and sends an indication to resume data transmission (Resume DT) to the peer.

In Sb7-3, the Node A or the Node B decides to end the DT process according to the processing strategy, and sends an indication to end data transmission (End DT) to the peer.

In Sb8, after the new-type data transmission is complete, the Node A sends an indication of completion of the data transmission (Complete DT) to the Node B.

In some embodiments, if the Node A starts the timer T2 when performing the step Sb5, then the Node A needs to turn off the timer T2 when performing the step Sb8.

It can be understood that, in embodiments of the present disclosure, the trigger source for transmitting new-type data is not limited, which may be triggered by the sending end or the receiving end, making the transmission of new-type data more flexible. Meanwhile, in the present disclosure, whether to initiate the new-type data transmission request may be determined and the new-type data transmission process is controlled based on the configuration parameter related to the data transmission, and the reliability of data transmission may be ensured.

The above introduces the solutions of the embodiments of the present disclosure mainly from the perspective of the method. It can be understood that, in order to implement the above functions, a data transmission apparatus contains at least one of corresponding hardware structures or software modules for performing various functions. Those skilled in the art should easily realize that the embodiments of the present disclosure can be implemented in the form of hardware or a combination of hardware and computer software, in combination with the units and algorithm steps of various examples described in the embodiments disclosed herein. Whether a certain function is performed by hardware or by computer software driving hardware, depends on a specific application and a design constraint condition of the technical solution. Professional technicians may use different methods to implement the described functions for each specific application, but such implementation should not be considered beyond the scope of the embodiments of the present disclosure.

In the embodiments of the present disclosure, the data transmission apparatus may be divided into functional modules according to the above-mentioned method embodiments, and for example, each functional module may be divided corresponding to each function, or two or more functions may also be integrated into one functional module. The above integrated module is implemented in the form of hardware or in the form of software. It should be noted that the division of the modules in embodiments of the present disclosure is schematic, which is only a logical functional division, and there may be other divisions for in actual implementations. The example in which each functional module may be divided corresponding to each function is taken for explanation below.

FIG. 13 is a structural schematic diagram of a data transmission apparatus provided in the embodiments of the present disclosure. The data transmission apparatus is applied to a first communication node and may perform the data transmission method provided in the above method embodiments. As shown in FIG. 13, a data transmission apparatus 600 includes: a sending module 601 and a receiving module 602. In some other embodiments, the data transmission apparatus 600 further includes a processing module 603.

The sending module 601, is configured to send a first message to a second communication node, where the first message is used for requesting transmission of new-type data between the first communication node and the second communication node.

The receiving module 602, is configured to receive a second message sent from the second communication node; where the second message is used for indicating whether to transmit the new-type data between the first communication node and the second communication node.

In some embodiments, the new-type data is data generated within a communication system; and the new-type data includes at least one of: artificial intelligence (AI) data, sensing data, or computing power data.

In some embodiments, a data volume of the new-type data is greater than a first preset threshold.

In some embodiments, a flow direction of the new-type data includes: from the first communication node to the second communication node; or from the second communication node to the first communication node.

In some embodiments, the first message includes at least one of: a type of to-be-transmitted new-type data, a data volume of to-be-transmitted new-type data, or an expected duration for completing the transmission.

In some embodiments, the second message includes one of: an indication for agreeing transmission of the new-type data; an indication for rejecting transmission of the new-type data; or an indication for suspending transmission of the new-type data.

In some embodiments, the sending module 601, is further configured to send a configuration parameter related to a data transmission to the second communication node; where the configuration parameter includes at least one of: a data volume threshold, a signal quality threshold, or a transmission rate threshold.

In some embodiments, the receiving module 602, is further configured to receive a configuration parameter related to a data transmission sent from the second communication node; where the configuration parameter includes at least one of: a data volume threshold, a signal quality threshold, or a transmission rate threshold.

In some embodiments, the sending module 601, is specifically configured to send the first message to the second communication node in a case where a preset condition is satisfied.

In some embodiments, the preset condition includes at least one of: a data volume of to-be-transmitted new-type data being less than the data volume threshold; signal quality of a signal received by the first communication node being greater than the signal quality threshold; or a transmission rate of a channel between the first communication node and the second communication node being greater than the transmission rate threshold.

In some embodiments, the sending module 601, is further configured to, in a process of transmitting the new-type data, in a case of deciding to suspend transmission of the new-type data, send a third message to the second communication node, where the third message is used for instructing to suspend transmission of the new-type data between the first communication node and the second communication node.

In some embodiments, the receiving module 602, is further configured to, in a process of transmitting the new-type data, receive a fourth message sent from the second communication node, where the fourth message is used for instructing to suspend transmission of the new-type data between the first communication node and the second communication node; and the processing module 603, is configured to suspend transmission of the new-type data in response to the fourth message.

In some embodiments, the sending module 601, is further configured to, in a case of deciding to resume transmission of the new-type data, send a fifth message to the second communication node, where the fifth message is used for instructing to resume transmission of the new-type data between the first communication node and the second communication node.

In some embodiments, the receiving module 602, is further configured to receive a sixth message sent from the second communication node, where the sixth message is used for instructing to resume transmission of the new-type data between the first communication node and the second communication node; and the processing module 603, is further configured to resume transmission of the new-type data in response to the sixth message.

In some embodiments, the sending module 601, is further configured to, in a process of transmitting the new-type data, in a case of deciding to end transmission of the new-type data, send a seventh message to the second communication node, where the seventh message is used for instructing to end transmission of the new-type data between the first communication node and the second communication node.

In some embodiments, the receiving module 602, is further configured to, in a process of transmitting the new-type data, receive an eighth message sent from the second communication node, where the eighth message is used for instructing to end transmission of the new-type data between the first communication node and the second communication node; and the processing module 603, is further configured to end transmission of the new-type data in response to the eighth message.

In some embodiments, the first message is one of: a radio resource control (RRC) signaling, a medium access control control element (MAC CE), uplink control information (UCI), downlink control information (DCI), or a protocol data unit (PDU).

In some embodiments, the second message is one of: an RRC signaling, an MAC CE, DCI, UCI, or a PDU.

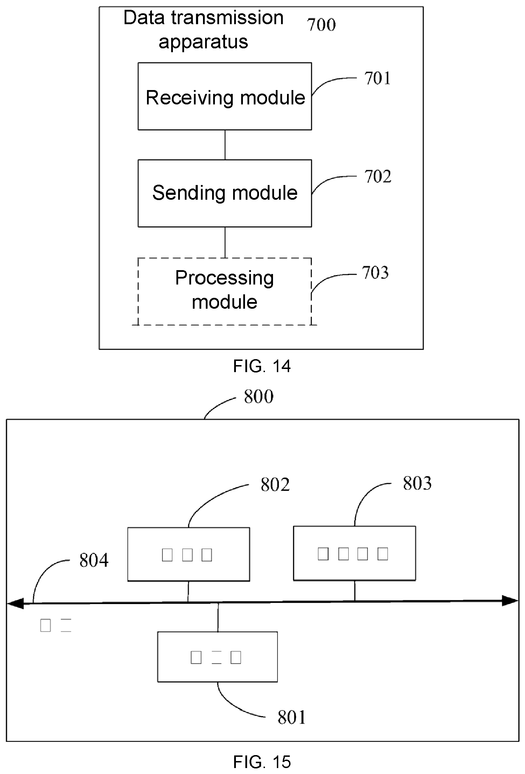

FIG. 14 is a structural schematic diagram of another data transmission apparatus provided in the embodiments of the present disclosure. The data transmission apparatus is applied to a second communication node and may perform the data transmission method provided in the above method embodiments. As shown in FIG. 14, a data transmission apparatus 700 includes: a receiving module 701 and a sending module 702. In some other embodiments, the data transmission apparatus 700 further includes: a processing module 703.

The receiving module 701, is configured to receive a first message sent from a first communication node, where the first message is used for requesting transmission of new-type data between the first communication node and the second communication node.

The sending module 702, is configured to send a second message to the first communication node in response to the first message, where the second message is used for indicating whether to transmit the new-type data between the first communication node and the second communication node.

In some embodiments, the new-type data is data generated within a communication system; and the new-type data includes at least one of: AI data, sensing data, or computing power data.

In some embodiments, a data volume of the new-type data is greater than a first preset threshold.

In some embodiments, a flow direction of the new-type data includes: from the first communication node to the second communication node; or from the second communication node to the first communication node.

In some embodiments, the first message includes at least one of: a type of to-be-transmitted new-type data, a data volume of to-be-transmitted new-type data, or an expected duration for completing the transmission.

In some embodiments, the second message includes one of: an indication for agreeing transmission of the new-type data; an indication for rejecting transmission of the new-type data; or an indication for suspending transmission of the new-type data.

In some embodiments, the receiving module 701, is further configured to receive a configuration parameter related to a data transmission sent from the first communication node; where the configuration parameter includes at least one of: a data volume threshold, a signal quality threshold, or a transmission rate threshold.

In some embodiments, the sending module 702, is further configured to send a configuration parameter related to a data transmission to the first communication node; where the configuration parameter includes at least one of: a data volume threshold, a signal quality threshold, or a transmission rate threshold.

In some embodiments, the sending module 702, is specifically configured to send the second message to the first communication node according to a satisfaction of a preset condition.

In some embodiments, the preset condition includes at least one of: a data volume of to-be-transmitted new-type data being less than the data volume threshold; signal quality of a signal received by the first communication node being greater than the signal quality threshold; or a transmission rate of a channel between the first communication node and the second communication node being greater than the transmission rate threshold.

In some embodiments, the receiving module 701, is further configured to, in a process of transmitting the new-type data, receive a third message sent from the first communication node, where the third message is used for instructing to suspend transmission of the new-type data between the first communication node and the second communication node; and the processing module 703, is configured to suspend transmission of the new-type data in response to the third message.

In some embodiments, the sending module 702, is further configured to in a process of transmitting the new-type data, in a case of deciding to suspend transmission of the new-type data, send a fourth message to the first communication node, where the fourth message is used for instructing to suspend transmission of the new-type data between the first communication node and the second communication node.

In some embodiments, the receiving module 701, is further configured to receive a fifth message sent from the first communication node, where the fifth message is used for instructing to resume transmission of the new-type data between the first communication node and the second communication node; and the processing module 703, is further configured to resume transmission of the new-type data in response to the fifth message.

In some embodiments, the sending module 702, is further configured to, in a case of deciding to resume transmission of the new-type data, send a sixth message to the first communication node, where the sixth message is used for instructing to resume transmission of the new-type data between the first communication node and the second communication node.

In some embodiments, the receiving module 701, is further configured to receive a seventh message sent from the first communication node, where the seventh message is used for instructing to end transmission of the new-type data between the first communication node and the second communication node; and the processing module 703, is further configured to end transmission of the new-type data in response to the seventh message.

In some embodiments, the sending module 702 is further configured to, in a process of transmitting the new-type data, in a case of deciding to end transmission of the new-type data, send an eighth message to the first communication node, where the eighth message is used for instructing to end transmission of the new-type data between the first communication node and the second communication node.

In some embodiments, the first message is one of: an RRC signaling, an MAC CE, UCI, DCI or a PDU.

In some embodiments, the second message is one of: an RRC signaling, an MAC CE, DCI, UCI or a PDU.

In a case of implementing the functions of the integrated modules mentioned above in the form of hardware, the embodiments of the present disclosure provide a possible structure of a communication apparatus involved in the above embodiments. As shown in FIG. 15, the communication apparatus 800 includes a processor 802 and a bus 804. Optionally, the communication apparatus may further include a memory 801; optionally, the communication apparatus 800 may further include a communication interface 803.

The processor 802 may implement or perform various exemplary logical blocks, modules and circuits described in conjunction with the embodiments of the present disclosure. The processor 802 may be a central processing unit, a general-purpose processor, a digital signal processor, an application specific integrated circuit, a field programmable gate array or other programmable logic devices, transistor logic devices, hardware components, or any combination thereof. It may implement or perform various exemplary logical blocks, modules and circuits described in conjunction with the embodiments of the present disclosure. The processor 802 may also be a combination capable of implementing computing functions, for example, including a combination of one or more microprocessors, or a combination of a digital signal processor (DSP) and a microprocessor.

The communication interface 803 is configured to connect with other devices via a communication network. The communication network may be an Ethernet, a radio access network, a wireless local area network (WLAN), or the like.

The memory 801 may be a read-only memory (Read-Only Memory, ROM), or other types of a static storage device that may store static information and instructions, a random access memory (Random Access Memory, RAM), or other types of a dynamic storage device that may store information and instructions, or an electrically erasable programmable read-only memory (Electrically Erasable Programmable Read-Only Memory, EEPROM), a magnetic disk storage medium or other magnetic storage device, or any other medium that can be used to carry or store desired program codes in the form of instructions or data structures and can be accessed by a computer, but which is not limited thereto.

As a possible implementation, the memory 801 may exist independently of the processor 802, and the memory 801 may be connected to the processor 802 through the bus 804, for storing instructions or program codes. The processor 802, upon calling and executing the instructions or program codes stored in the memory 801, is capable of implementing the data transmission method provided in the embodiments of the present disclosure. As another possible implementation, the memory 801 may also be integrated with the processor 802.

The bus 804 may be an extended industry standard architecture (EISA) bus or the like. Buses 804 may be divided into address buses, data buses, control buses, and the like. For the convenience of representation, only one thick line is used in FIG. 15 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the data transmission method as described in any embodiment of the above-mentioned embodiments.

Exemplarily, the above computer readable storage medium may include, but be not limited to, a magnetic storage device (for example, a hard disk, a floppy disk, or a magnetic tape, etc.), an optical disk (for example, a compact disk (Compact Disk, CD), a digital versatile disk (Digital Versatile Disk, DVD), etc.), a smart card and a flash memory device (for example, an erasable programmable read-only memory (Erasable Programmable Read-Only Memory, EPROM), a card, a stick, or a key drive, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

The embodiments of the present disclosure provide a computer program product containing instructions, and the computer program product, when running on a computer, causes the computer to perform the data transmission method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A data transmission method, **characterized in that** the method is applied to a first communication node, and comprises:
sending a first message to a second communication node, wherein the first message is used for requesting transmission of new-type data between the first communication node and the second communication node; and
receiving a second message sent from the second communication node; wherein the second message is used for indicating whether to transmit the new-type data between the first communication node and the second communication node.

2. The method according to claim 1, wherein the new-type data is data generated within a communication system; and the new-type data comprises at least one of: artificial intelligence (AI) data, sensing data, or computing power data.

3. The method according to claim 1, wherein a flow direction of the new-type data comprises:
from the first communication node to the second communication node; or
from the second communication node to the first communication node.

4. The method according to claim 1, wherein the first message comprises at least one of:
a type of to-be-transmitted new-type data, a data volume of to-be-transmitted new-type data, or an expected duration for completing the transmission.

5. The method according to claim 1, wherein the second message comprises one of:
an indication for agreeing transmission of the new-type data;
an indication for rejecting transmission of the new-type data; or
an indication for suspending transmission of the new-type data.

6. The method according to claim 1, wherein the method further comprises:
sending a configuration parameter related to a data transmission to the second communication node; wherein the configuration parameter comprises at least one of: a data volume threshold, a signal quality threshold, or a transmission rate threshold.

7. The method according to claim 1, wherein the method further comprises:
receiving a configuration parameter related to a data transmission sent from the second communication node; wherein the configuration parameter comprises at least one of: a data volume threshold, a signal quality threshold, or a transmission rate threshold.

8. The method according to claim 6 or 7, wherein sending the first message to the second communication node comprises: in a case where a preset condition is satisfied, sending the first message to the second communication node.

9. The method according to claim 8, wherein the preset condition comprises at least one of:
a data volume of to-be-transmitted new-type data being less than the data volume threshold;
signal quality of a signal received by the first communication node being greater than the signal quality threshold; or
a transmission rate of a channel between the first communication node and the second communication node being greater than the transmission rate threshold.

10. The method according to claim 1, wherein the method further comprises:
in a process of transmitting the new-type data, in a case of deciding to suspend transmission of the new-type data, sending a third message to the second communication node, wherein the third message is used for instructing to suspend transmission of the new-type data between the first communication node and the second communication node.

11. The method according to claim 1, wherein the method further comprises:
in a process of transmitting the new-type data, receiving a fourth message sent from the second communication node, wherein the fourth message is used for instructing to suspend transmission of the new-type data between the first communication node and the second communication node; and
in response to the fourth message, suspending transmission of the new-type data.

12. The method according to claim 10 or 11, wherein the method further comprises:
in a case of deciding to resume transmission of the new-type data, sending a fifth message to the second communication node, wherein the fifth message is used for instructing to resume transmission of the new-type data between the first communication node and the second communication node.

13. The method according to claim 10 or 11, wherein the method further comprises:
receiving a sixth message sent from the second communication node, wherein the sixth message is used for instructing to resume transmission of the new-type data between the first communication node and the second communication node; and
in response to the sixth message, resuming transmission of the new-type data.

14. The method according to claim 1, wherein the method further comprises:
in a process of transmitting the new-type data, in a case of deciding to end transmission of the new-type data, sending a seventh message to the second communication node, wherein the seventh message is used for instructing to end transmission of the new-type data between the first communication node and the second communication node.

15. The method according to claim 1, wherein the method further comprises:
in a process of transmitting the new-type data, receiving an eighth message sent from the second communication node, wherein the eighth message is used for instructing to end transmission of the new-type data between the first communication node and the second communication node; and
in response to the eighth message, ending transmission of the new-type data.

16. The method according to claim 1, wherein the first message is one of: a radio resource control (RRC) signaling, a medium access control element (MAC CE), uplink control information (UCI), downlink control information (DCI), or a protocol data unit (PDU).

17. The method according to claim 1, wherein the second message is one of: an RRC signaling, an MAC CE, DCI, UCI, or a PDU.

18. A data transmission method, **characterized in that** the method is applied to a second communication node, and comprises:
receiving a first message sent from a first communication node, wherein the first message is used for requesting transmission of new-type data between the first communication node and the second communication node; and
in response to the first message, sending a second message to the first communication node, wherein the second message is used for indicating whether to transmit the new-type data between the first communication node and the second communication node.

19. The method according to claim 18, wherein the first message comprises at least one of:
a type of to-be-transmitted new-type data, a data volume of to-be-transmitted new-type data, or an expected duration for completing the transmission.

20. The method according to claim 18, wherein the second message comprises one of:
an indication for agreeing transmission of the new-type data;
an indication for rejecting transmission of the new-type data; or
an indication for suspending transmission of the new-type data.

21. The method according to claim 18, wherein the method further comprises:
receiving a configuration parameter related to a data transmission sent from the first communication node; wherein the configuration parameter comprises at least one of: a data volume threshold, a signal quality threshold, or a transmission rate threshold.

22. The method according to claim 18, wherein the method further comprises:
sending a configuration parameter related to a data transmission to the first communication node; wherein the configuration parameter comprises at least one of: a data volume threshold, a signal quality threshold, or a transmission rate threshold.

23. The method according to claim 21 or 22, wherein sending the second message to the first communication node comprises:
sending the second message to the first communication node according to a satisfaction of a preset condition.

24. The method according to claim 23, wherein the preset condition comprises at least one of:
a data volume of to-be-transmitted new-type data being less than the data volume threshold;
signal quality of a signal received by the first communication node being greater than the signal quality threshold; or
a transmission rate of a channel between the first communication node and the second communication node being greater than the transmission rate threshold.

25. The method according to claim 18, wherein the method further comprises:
in a process of transmitting the new-type data, receiving a third message sent from the first communication node, wherein the third message is used for instructing to suspend transmission of the new-type data between the first communication node and the second communication node; and
in response to the third message, suspending transmission of the new-type data.

26. The method according to claim 18, wherein the method further comprises:
in a process of transmitting the new-type data, in a case of deciding to suspend transmission of the new-type data, sending a fourth message to the first communication node, wherein the fourth message is used for instructing to suspend transmission of the new-type data between the first communication node and the second communication node.

27. The method according to claim 25 or 26, wherein the method further comprises:
receiving a fifth message sent from the first communication node, wherein the fifth message is used for instructing to resume transmission of the new-type data between the first communication node and the second communication node; and
in response to the fifth message, resuming transmission of the new-type data.

28. The method according to claim 25 or 26, wherein the method further comprises:
in a case of deciding to resume transmission of the new-type data, sending a sixth message to the first communication node, wherein the sixth message is used for instructing to resume transmission of the new-type data between the first communication node and the second communication node.

29. The method according to claim 18, wherein the method further comprises:
receiving a seventh message sent from the first communication node, wherein the seventh message is used for instructing to end transmission of the new-type data between the first communication node and the second communication node; and
in response to the seventh message, ending transmission of the new-type data.

30. The method according to claim 18, wherein the method further comprises:
in a process of transmitting the new-type data, in a case of deciding to end transmission of the new-type data, sending an eighth message to the first communication node, wherein the eighth message is used for instructing to end transmission of the new-type data between the first communication node and the second communication node.

31. The method according to claim 18, wherein the first message is one of: an RRC signaling, an MAC CE, UCI, DCI or a PDU.

32. The method according to claim 18, wherein the second message is one of: an RRC signaling, an MAC CE, DCI, UCI or a PDU.

33. A communication apparatus, **characterized by** comprising: a memory and a processor; wherein the memory and the processor are coupled; the memory is configured to store instructions executable by the processor; and the processor, upon executing the instructions, performs the data transmission method according to any one of claims 1 to 32.

34. A computer readable storage medium, **characterized in that** the computer readable storage medium has stored computer instructions thereon, and the computer instructions, upon being executed on an electronic device, enable the electronic device to perform the data transmission method according to any one of claims 1 to 32.
